Europäisches Patentamt

European Patent Office

Office européen des brevets

(11) Veröffentlichungsnummer: **0 057 750**
**B1**

(12) **EUROPÄISCHE PATENTSCHRIFT**

(45) Veröffentlichungstag der Patentschrift: 26.03.86

(21) Anmeldenummer: 81108293.2

(22) Anmeldetag: 13.10.81

(51) Int. Cl.⁴: **G 09 G 1/00**

(54) Verfahren und Anordnung zum Darstellen von Steuerzeichen an einem Bildschirm einer Anzeigeeinrichtung.

(30) Priorität: 10.02.81 DE 3104639

(43) Veröffentlichungstag der Anmeldung:
18.08.82 Patentblatt 82/33

(45) Bekanntmachung des Hinweises auf die
Patenterteilung:
26.03.86 Patentblatt 86/13

(84) Benannte Vertragsstaaten:
AT CH FR GB LI NL SE

(56) Entgegenhaltungen:
DE-A-2 540 734

IBM TECHNICAL DISCLOSURE BULLETIN,
Band 20, Nr. 11B, April 1978, Seite 4901, New
York, USA, J.T. SCHMIDT: "Display character
set altered by data bit"

IBM TECHNICAL DISCLOSURE BULLETIN,
Band 21, Nr. 1, Juni 1978, Seiten 295,296, New
York, USA, L.W. NICHOLSON et al.: "Attribute
controller display modification"

(73) Patentinhaber: Siemens Aktiengesellschaft
Berlin und München Wittelsbacherplatz 2
D-8000 München 2 (DE)

(72) Erfinder: Popp, Otmar
Willibaldstrasse 148
D-8000 München 21 (DE)
Erfinder: Altmann, Helmut, Dipl.-Ing.
Kurfürstenstrasse 18
D-8034 Germering (DE)
Erfinder: Diaz, Hernando, Ing.grad.
Kurfürstenstrasse 16
D-8034 Germering (DE)

(56) Entgegenhaltungen:
IBM TECHNICAL DISCLOSURE BULLETIN,
Band 21, Nr. 4, September 1978, Seiten
1608-1609, New York, USA A.J. DEBRUYN et
al.: "Character attributes for an alphanumeric
display"

IBM TECHNICAL DISCLOSURE BULLETIN,
Band 17, Nr. 4, September 1974, Seite 957,
New York, USA, D.W. TERRY: "Nonprinting
character display for diagnostics"

Funkschau 49 (26.August 1977) 18, Seiten
78-82

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung bezieht sich auf ein Verfahren und eine Anordnung zum Darstellen von Steuerzeichen an einem Bildschirm einer Anzeigeeinrichtung, die einen Seitenspeicher enthält, in dem Codewörter speicherbar sind, die am Bildschirm anzeigbaren alphanumerischen und/oder graphischen Zeichen und die Eigenschaften der Zeichen bestimmenden Steuerzeichen zugeordnet sind, die eine Tastatur enthält, mittels der die den Zeichen und den Steuerzeichen zugeordneten Codewörter in den Seitenspeicher eingebbar sind und die eine mit einem Zeichengenerator versehene Bildsteuereinheit enthält, die die Darstellung der Zeichen am Bildschirm steuert und bei der zum Erstellen und loder Bearbeiten des Bildschirminhaltes ein besonderer Betriebszustand einstellbar ist, in dem den Steuerzeichen zugeordnete Sonderzeichen am Bildschirm darstellbar sind. Bei dem Telekommunikationsdienst "Bildschirmtext' ("Videotex-Interactive") ist es möglich, über eine Fernsprechleitung mit Hilfe eines Fernsehgerätes in einer Zentrale gespeicherte Informationen abzurufen. Die Informationen werden am Bildschirm des als Anzeigeeinrichtung dienenden Fernsehgerätes dargestellt. Es kann eine Darstellung von alphanumerischen Zeichen und/oder aus graphischen Zeichen gebildeten Mustern erfolgen.

Für die Informationsanbieter sind Editiereinrichtungen vorgesehen, mittels denen die Informationen in Form von Bildschirminhalten aufbereitet werden. Anschließend werden die Bildschirminhalte zur Zentrale übertragen und können dann von den Teilnehmern abgerufen werden.

Ein Bildschirminhalt wird als Seite bezeichnet. Die Seite enthält beispielsweise 960 Zeichenfelder, die in 24 Zeilen mit jeweils 40 Zeichenfeldern angeordnet sind. Bei einer Darstellung von alphanumerischen Zeichen ist in jedem Zeichenfeld ein Zeichen dargestellt. Das Zeichenfeld besteht beispielsweise aus 8×10 oder 8×12 Bildpunkten, mit denen die einzelnen Zeichen dargestellt werden. Die Darstellung der graphischen Muster erfolgt dadurch, daß jedes Zeichenfeld ein graphisches Zeichen enthält, das aus 2×3 Graphikelementen gebildet wird. Die graphischen Muster werden aus den Kombinationen von hellen und dunklen Graphikelementen in den verschiedenen Farben aufgebaut, wobei innerhalb eines Zeichenfeldes die Farben nicht geändert werden können.

Die Anzeigeeinrichtung enthält eine Bildsteuereinheit, die die Darstellung der Zeichen am Bildschirm steuert. Die Bildsteuereinheit enthält einen Zeichengenerator, in dem ein vorgegebener Vorrat an alphanumerischen und graphischen Zeichen gespeichert ist. Unter Verwendung von Codewörtern, die in einem Seitenspeicher gespeichert sind und die die Adresssen des Zeichengenerators darstellen, werden den Bildpunkten der Zeichen oder den Graphikelementen zugeordnete Datenwörter aus den Zeichengeneratoren ausgelesen und einer den Bildschirm enthaltenden Anzeigeeinheit zugeführt.

Die Eigenschaften der darstellbaren Zeichen werden durch Steuerzeichen bestimmt, die ebenfalls in Form von Codewörtern in dem Seitenspeicher gespeichert sind. Die Steuerzeichen geben beispielsweise an, in welcher Farbe die Zeichen dargestellt werden sollen, ob die Zeichen blinkend, nicht blinkend, in normaler Höhe oder in doppelter Höhe dargestellt werden sollen. Bei einer seriellen Codierung der Zeichen und der Steuerzeichen ist jeder Stelle am Bildschirm ein für ein bodewort vorgesehener Speicher bereich im Seitenspeicher zugeordnet. Falls in einem Speicherbereich ein Codewort eines Steuerzeichens gespeichert ist, wird an der entsprechenden Stelle am Bildschirm im allgemeinen kein Zeichen dargestellt. Die Zuordnung der Codewörter zu den Zeichen und den Steuerzeichen ist für die serielle Codierung beispielsweise aus der Zeitschrift "Funkschau" (1977), Heft 18, Seiten 78—82 bekannt.

Bei einer parallelen Codierung wird die Anzahl der Binärzeichen der den darstellbaren Zeichen zugeordneten Codewörter derart vergrößert, daß jedem Zeichen als Begleitinformation ein Steuerzeichen beigegeben werden kann. In diesem Fall entfallen die für die Steuerzeichen vorgesehenen Lücken und an allen Stellen des Bildschirms können Zeichen dargestellt werden. Es ist auch möglich, die parallele Codierung mit der seriellen Codierung zu kombinieren.

Da die Steuerzeichen nicht angezeigt werden und sich bei der seriellen Codierung auf den Bildschirm damit nicht von dem Zeichen "Zwischenraum" unterscheiden, ist es bei der Erstellung oder Änderung eines Bildschirminhalts nicht mögliche, die Positionen bereits eingegebener Steuerzeichen ohne weiteres zu erkennen.

Es wäre denkbar, nach dem Betätigen einer entsprechenden Taste an einer für die Erstellung oder Bearbeitung des Bildschirminhalts vorgesehenen Tastatur an allen Stellen, an denen Steuerzeichen gespeichert sind, entsprechende Sonderzeichen anzuzeigen, wie beispielsweise aus der Veröffentlichung "Display character set altered by data bit" von J. T. Schmidt in IBM Technical Disclosure Bulletin, Band 20 (April 1978) Nr. 11B, Seite 4901 bekannt. Falls mehrere Steuerzeichen aufeinanderfolgend gespeichert sind, ist es in diesem Fall nicht ohne weiteres möglich, sehr schnell die Position eines bestimmten Steuerzeichens zu erkennen, um beispielsweise nur dieses ändern zu können.

Es ist auch bereits bekannt, in einer zusätzlichen Anzeigzeile am unteren Rand des Bildschirms immer dann einen ein Steuerzeichen kennzeichnenden Text anzuzeigen, wenn die Schreibmarke am Bildschirm an eine Stelle positioniert wird, der ein Steuerzeichen zugeordnet ist. Ein Anzeige eines solchen Kennzeichnenden Textes in der rechten Hällte des oberen Bildschirmbereiches ist aus der Veröffentlichung "Non printing character display for diagnostics" von D. W. Terry in IBM Technical Disclosure Bulletin, Band 17 (September 1974), Nr. 4, Seite 957 z.B. bekannt. Auf diese Weise kann die Position eines zu ändernden Steuerzeichens erkannt werden. Falls das Steuerzeichen jedoch erst an einer anderen Stelle wirksam wird, muß dieses Steuerzeichen erst mittels der Schreibmarke gesucht werden. Außerdem ist ein verhaltnismäßig großer Aufwand erforderlich, da am Bildschirm die zusätzliche Anzeigezeile dargestellt werden muß.

Der Erfindung liegt daher die Aufgabe zugrunde, ein Verfahren anzugeben, mit dem auf einfache Weise und sehr schnell die einem bestimmten Steuerzeichen zugeordnete Stelle am Bildschirm einer Anzeigeeinrichtung ermittelt werden kann.

Erfindungsgemäß wird die Aufgabe bei dem Verfahren der eingangs genannten Art dadurch gelöst, daß nach dem Betätigen einer einem bestimmten Steuerzeichen zugeordneten Taste an der Tastatur an wenigstens einer Stelle am Bildschirm, die diesem Steuerzeichen im Seitenspeicher zugeordnet ist, ein nur dieser Steuertaste zugeordnetes Sonderzeichen dargestellt wird und daß die Darstellung der den übrigen Steuerzeichen zugeordneten Sonderzeichen am Bildschirm gesperrt wird.

Das Verfahren gemäß der Erfindung hat den Vorteil, daß die Erstellung, die Korrektur und die Aktualisierung eines Bildschirminhalts auf einfache Weise und sehr schnell durchgeführt werden kann, da die einem bestimmten Steuerzeichen zugeordnete Stelle am Bildschirm unmittelbar angezeigt wird

Falls mehrere gleiche Steuerzeichen im Bildschirminhalt enthalten sind und dieses Steuerzeichen mittels der entsprechenden Taste aufgerufen wird, kann das jeweils nachfolgende Steuerzeichen auf einfache Weise dadurch aufgerufen werden, daß nach jeweils einer weiteren Betätigung der Taste das Sonderzeichen an der jeweils nächsten, diesem Steuerzeichen zugeordneten Stelle am Bildschirm dargestellt wird. In diesem Fall wird am Bildschirm jeweils nur eine diesem Steuerzeichen zugeordnete Stelle dargestellt. Es kann sich jedoch als zweckmäßig erweisen, daß die zuvor dargestellten Sonderzeichen weiterhin dargestellt werden.

Falls es erwünscht ist, alle Stellen am Bildschirm zu kennzeichnen, denen ein bestimmtes Steuerzeichen zugeordnet ist, ist es vorteilhaft, wenn nach dem Betätigen der Taste das Sonderzeichen an allen diesem Steuerzeichen zugeordneten Stellen am Bildschirm dargestellt wird.

Ein zusätzlicher Zeichengenerator für das Sonderzeichen ist nicht erforderlich, wenn als Sonderzeichen die Schreibmarke vorgesehen ist.

Um dem Benutzer auch am Bildschirm die Art des Steuerzeichens anzeigen zu können, ist es günstig, wenn als Sonderzeichen ein das jeweilige Steuerzeichen kennzeichnendes Zeichen vorgesehen ist. Diese Zeichen können beispielsweise jeweils eine mnemotechnische Abkührung der Funktion des jeweiligen Steuerzeichens sein. Es besteht auch die Möglichkeit, daß gleichzeitig mit der Darstellung der Sonderzeichen am Bildschirm in einer zusätzlichen Anzeigezeile ein die Steuerzeichen kennzeichnender Text dargestellt wird.

Es ist möglich, die Sonderzeichen gleichzeitig mit dem übrigen Bildschirminhalt anzuzeigen. Eine besonders übersichtliche Darstellung der Sonderzeichen wird jedoch erreicht, wenn während der Darstellung der Sonderzeichen die Darstellung der alphanumerischen und/oder graphischen Zeichen gesperrt wird.

Eine vorteilhafte Ausführungsform einer Schaltungsanordnung zur Durchführung des Verfahrens wird erreicht, wenn vorgesehen ist, der von der Tastatur das dem jeweiligen Steuerzeichen zugeordnete Codewort einer Schaltstufe zugeführt wird, die das Codewort mit im Seitenspeicher gespeicherten Codewörtern vergleicht und die an die Bildsteuereinheit Signale abgibt, die die Anzeige des Sonderzeichens am Bildschirm auslösen, wenn ein Vergleicher die Gleichheit eines aus dem Seitenspeicher ausgelesenen Codewortes mit dem mittels der Tastatur eingegebenen Codewort feststellt.

Zum selbsttätigen Anzeigen aller dem Sonderzeichen zugeordneten Stellen am Bildschirm ist es vorteilhaft, wenn die Schaltstufe einen Taktgeber enthält, de Taktimpulse erzeugt, mit denen die Anzeige de Sonderzeichen fortgeschaltet wird und der durch ein vom Vergleicher abgegebenes Signal gesperrt wird, wenn das vom Seitenspeicher ausgelesene Codewort und das eingegebene Codewort gleich sind.

Um an den einem Steuerzeichen zugeordneten Stellen am Bildschirm oder in der zusätzlichen Anzeigezeile das Steuerzeichen kennzeichnende Zeichen darstellen zu können, ist es zweckmäßig, wenn ein weiterer Zeichengenerator vorgesehen ist, in dem Datenwörter gespeichert sind, die den Formen von die Steuerzeichen kennzeichnenden Zeichen zugeordnet sind und die ausgelesen werden, wenn ein aus dem Seitenspeicher ausgelesenes Codewort und das eingegebene Codewort gleich sind.

Im folgenden wird eine Durchführung des erfindungsgemäßen verfahrens anhand von Zeichnung näher erläutert.
Es zeigen:

Figur 1 einen Ausschnitt aus einer Anzeigezeile an einem Bildschirm und die entsprechenden Speicherbereiche in einem Seitenspeicher,

Figur 2 einen Ausschnitt aus der Anzeigezeile am Bildschirm und die entsprechenden Speicherbereiche im Seitenspeicher,

Figur 3 Ausschnitte der Anzeigezeile am Bildschirm,

Figur 4 ein Blockschaltbild einer Schaltungsanordnung zur Durchführung des Verfahrens,

Figur 5 ein Blockschaltbild einer Schaltstufe.

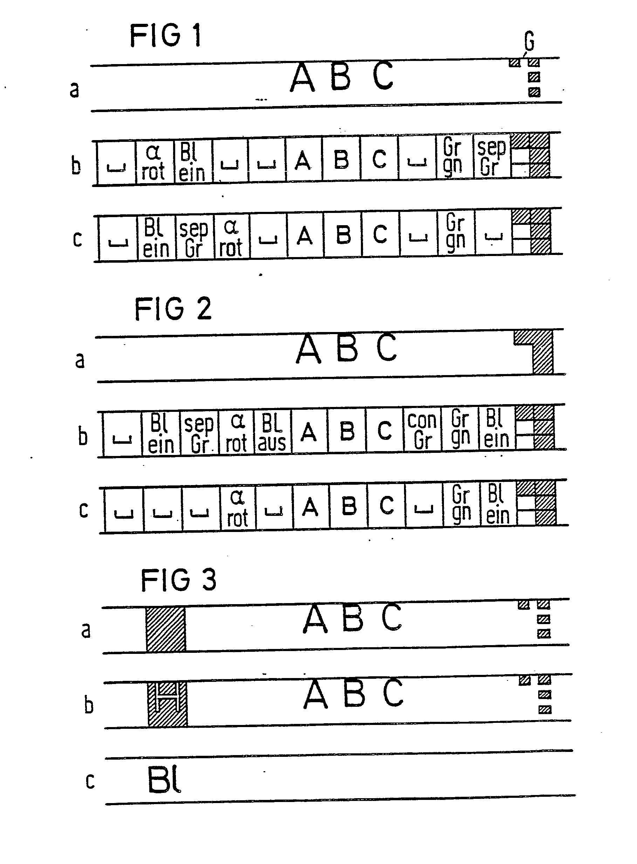

Bei der in Figur 1 bei a dargestellten Anzeigezeile wird angenommen, daß alphanumerische Zeichen "ABC" rot und blinkend dargestellt werden und ein graphisches Zeichen G grün und blinkend dargestellt wird. In dem bei b dargestellten Ausschnitt aus dem Speicherbereich sind die entsprechenden Codewörter für die alphanumerischen Zeichen "ABC' und das graphischeZeichen G sowie zugehörige Steuerzeichen dargestellt. Die Codewörter sind binärcodiert gespeichert, jedoch aus Gründen der Übersichtlichkeit sind sie durch mnemotechnische Abkürzungen bzw. durch graphische Darstellungen wiedergegeben. Nach einem Codewort für das Zeichen "Zwischenraum" ist jeweils ein Codewort für das Steuerzeichen "a rot" (alphanumerisches Zeichen rot) bzw. "Bl ein" (blinkend) im Seitenspeicher gespeichert. Nach zwei weiteren Codewörtern für das Zeichen "Zwischenraum" folgen die Codewörter für die alphanumerischen Zeichen "ABC". Anschließend folgen die Codewörter für das Zeichen "Zwischenraum", die Steuerzeichen "Grgn" (graphisches Zeichen grün) und "sep Gr" (punktförmiges graphisches Zeichen, separated graphics) und für das graphische Zeichen G. Die Steuerzeichen "aa rot" und "Bl ein" veranlassen die blinkende Darstellung der alphanumerischen Zeichen "ABC" in roter Farbe. In entsprechender Weise veranlassen die Steuerzeichen "Gr gn" und "sep Gr" die Darstellung des grapischen Zeichens G in grüner Farbe und mit punktförmigen Elementen.

Die gleiche Darstellung am Bildschirm wird auch erreicht, wenn, wie bei c gezeigt, das Steuerzeichen "sep Gr' vor den alhanumerischen Zeichen "ABC" angeordnet wird. In jedem Fall wird es erst an der Stelle wirksam, an der das graphische Zeichen G dargestellt wird. Bei einer Darstellung am Bildschirm entsprechend der bei a dargestellten Anzeigezeile ist nun nicht zu erkennen, wo und in welcher Reihenfolge die einzelnen Steuerzeichen angeordnet sind, so daß eine Korrektur ode Aktualisierung der Anzeigezeile nicht ohne weiteres möglich ist.

Bei der Darstellung in Figur 2 wird angenommen, daß die alphanumerischen Zeichen "ABC" nicht mehr blinkend dargestellt werden sollen und daß, wie bei a dargestellt, das graphische Zeichen G aus flächenförmigen Elementen und nicht mehr aus punktförmigen Elementen dargestellt werden soll. Die Änderung kann dadurch erfolgen, daß, wie bei b dargestellt, vor den alphanumerischen Zeichen "ABC" das Steuerzeichen "Bl aus" (nicht blinkend) eingefügt wird und daß vor dem graphischen Zeichen G die Steuerzeichen "con Gr" (flächenförmiges graphisches Zeichen, continuous graphics) und "Bl ein" eingefügt werden. Falls die Positionen der einzelnen Steuerzeichen jedoch bekannt sind, ist es möglich, das gleiche Ergebnis dadurch zu erreichen, daß die Steuerzeichen "Bl ein" und 'sep Gr" gelöscht werden und daß vor dem graphischen Zeichen G das Steuerzeichen "Bl ein" eingefügt wird.

Um den in Figur 1 unter c dargestellten Speicherinhalt in den in Figur 2 unter c dargestellten Speicherinhalt abändern zu können, ist es erforderlich, die Position des Steuerzeichens "Bl ein" zu ermitteln. Gemäß dem Verfahren wird an der Tastatur eine Taste betätigt, die diesem Steuerzeichen zugeordnet ist. Beim Auslesen des Speichers für die Anzeige am Bildschirm wird geprüft, ob das entsprechende Codewort im Seitenspeicher enthalten ist. Wenn dies der Fall ist, wird an der entsprechenden Stelle, wie in Figur 3 bei a dargestellt ist, ein Sonderzeichen, beispielsweise die Schreibmarke, dargestellt. Da das Steuerzeichen mehrfach vorhanden ist, besteht nun die Möglichkeit, nach einem weiteren Betätigen der selben Taste das nächstfolgende gleiche Steuerzeichen anzuzeigen, wobei die Anzeige des zuvor angezeigten Steuerzeichens beibehalten werden kann. Es besteht auch die Möglichkeit, nach dem Betätigen der entsprechenden Taste alle Stellen am Bildschirm gleichzeitig anzuzeigen, die diesem bestimmten Steuerzeichen zugeordnet sind.

Im ersten Fall, wenn das Sonderzeichen gleichzeitig die Schreibmarke darstellt, kann die Taste "Zwischenraum" betätigt werden und das Steuerzeichen "Bl ein" wird gelöscht. In den weiteren Fällen muß die Schreibmarke für das Löschen an die entsprechende Stelle gebracht werden.

Es ist auch möglich, als Sonderzeichen ein oder mehrere alphanumerische Zeichen anzuzeigen. Beispielsweise kann, wie bei b dargestellt ist, das Steuerzeichen "Bl ein" durch das alphanumerische Zeichen "H" auf einfache Weise dargestellt werden, da die letzten sechs Binärzeichen für beide Codewörter übereinstimmen. Um dieses als Sonderzeichen benutzte alphanumerische Zeichen von den üblichen alphanumerischen Zeichen unterscheiden zu können, ist es möglich, dieses invers, d.h. unter Vertauschung von Hinter- und Vordergrundfarbe oder unterstrichen darzustellen.

Weiterhin ist es möglich, wie bei c dargestellt ist, als Sonderzeichen ein Zeichen zu verwenden, das eine mnemotechnische Abkürzung der Funktion des Steuerzeichens darstell, Hierzu ist es jedoch erforderlich, einen weiteren Zeichengenerator vorzusehen, der den Formen dieser Zeichen zugeordnete Datenwörter enthält. Dieser Zeichengenerator kann selbstverständlich auch Bestandteil des in der Anzeigeeinrichtung vorgesehenen Zeichengenerators sein. Weiterhin ist es möglich, auch das Sonderzeichen entsprechend seiner Funktion darzustellen. Beispielsweise kann das Steuerzeichen "Bl ein" als blinkendes Sonderzeichen dargestellt werden.

Während der Darstellung der Sonderzeichen kann, wie bei c dargestellt ist, eine Darstellung der Zeichen gesperrt werden oder die Sonderzeichen können, wie bei a und b dargestellt ist, zusätzlich zu den Zeichen dargestellt werden.

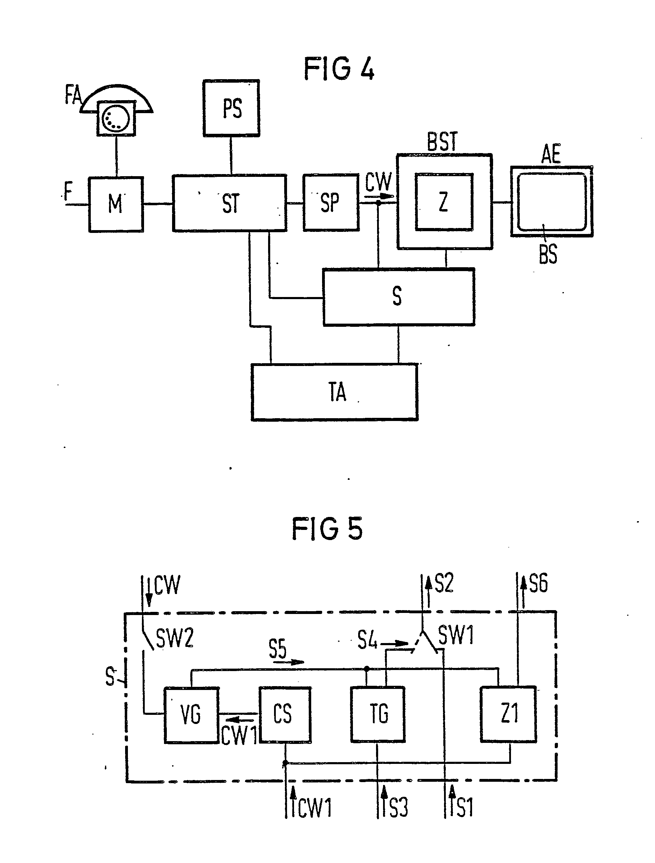

Die in Figur 4 dargestellte Anzeigeeinrichtung, die für den Telekommunikationsdienst "Bildschirmtext" vorgesehen ist, ist über einen Modem M mit einer Fernsprechleitung F verbunden. An dem Modem M ist in bekannter Weise ein Fernsprechapparat FA angeschlossen. Mit Hilfe der Anzeigeeinrichtung ist es einerseits möglich, über die Fernleitung F Informationen von einer Zentrale abzurufen und an einem Bildschirm BS einer Anzeigeeinheit AE darzustellen. Andererseits ist es auch möglich, mittels einer Tastatur TA selbst Bildschirminhalte aufzubauen oder zu korrigieren und sie über die Fernleitung F zur Zentrale zu übertragen. Weitere Bildschirminhalte können in einem peripheren Speicher PS zwischengespeichert werden.

Die Anzeigeeinrichtung enthält eine Steuereinheit ST, die den zeitlichen Ablauf steuert und üblicherweise einen Mikroprozessor enthält. An der Steuereinheit ST ist die Tastatur TA angeschlossen. Weiterhin enthält die Anzeigeeinrichtung einen Seitenspeicher SP, in dem Codewörter CW mindestens eines Bildschirminhalts, einer Seite, gespeichert sind. Dem Seitenspeicher SP ist eine Bildsteuereinheit BST nachgeschaltet, die in Abhängigkeit vom Inhalt des Seitenspeichers Videosignale an eine mit dem Bildschirm BS versehene Anzeigeeinheit AE abgibt. Die Bildsteuereinheit BST enthält einen Zeichengenerator Z, der durch die Codewörter CW adressiert wird, und der den Formen der darzustellenden alphanumerischen oder graphischen Zeichen zugeordnete Datenwörter enthält. Weiterhin enthält die Anzeigeeinrichtung eine Schaltstufe S, mittels der es möglich ist, bestimmte Steuerzeichen am Bildschirm BS anzuzeigen. Weitere Einzelheiten der Figur 4 werden im folgenden zusammen mit dem in Figur 5 dargestellten Blockschaltbild der Schaltstufe S beschrieben.

Bei dem in Figur 5 dargestellten Blockschaltbild wird angenommen, daß als Sonderzeichen die Schreibmarke vorgesehen ist. Ein Schalter SW1 ist normalerweise in der durchgezogen dargestellten Stellung und unter Verwendung von Signalen S1, die als Signale S2 zur Steuereinheit ST durchgeschaltet werden, wird die Schreibmarke normalerweise über die Tastataur bewegt. Bei der Darstellung der Steuerzeichen nimmt der Schalter SW1 die gestrichelt dargestellte Stellung ein. Nach dem Betätigen der einem bestimmten Steuerzeichen zugeordneten Taste der Tastatur TA gibt diese einerseits das das Steuerzeichen darstellende Codewort CW1 an einen Codewortspeicher CS ab und andererseits ein Startsignal S3 an einen Taktgeber TG ab. Der Taktgeber TG gibt nunmehr Signale S4 ab, mit denen die Bewegung der Schreibmarke gesteuert wird. Bei der Darstellung der Steuerzeichen wird auch der Schalter SW2 geschlossen und synchron mit der Bewegung der Schreibmarke wird der Seitenspeicher SP ausgelesen. Die Codewörter CW werden einem Vergleicher VG zugeführt. Wenn ein Codewort CW mit einem gespeicherten Codewort CW1 übereinstimmt, gibt der Vergleicher VG ein Signal S5 ab, das den Taktgeber TG sperrt und damit die Schreibmarke an der entsprechenden Stelle anhält. Auf diese Weise wird die Stelle markiert, die dem Steuerzeichen zugeordnet ist. Nach einem erneuten Betätigen der Taste wird mit Hilfe des Signals S3 der Taktgeber TG wieder freigegeben und die Schreibmarke wird so lange über den Bildschirm BS bewegt, bis der Vergleicher VG erneut ein Signal S5 abgibt und den Taktgeber TG wieder sperrt. Auf diese Weise kann durch mehrfaches Betätigen der Taste der ganze Seitenspeicher SP nach einem bestimmten Steuerzeichen abgesucht werden.

Falls als Sonderzeichen das Steuerzeichen mnemotechnisch wiedergebende Zeichen an den entsprechenden Stellen am Bildschirm BS oder falls in einer zusätzlichen Anzeigezeile am Bildschirm BS ein das Steuerzeichen kennzeichnender Text dargestellt werden soll, kann auch ein weiterer Zeichengenerator Z1 vorgesehen sein, in dem die entsprechenden Datenwörter gespeichert sind. Das Signal S5 und das Codewort CW1 werden dann diesem Zeichengenerator Z1 zugeführt und dieser gibt die entsprechenden Datenwörter als Signale S6 an die Bildsteuereinheit BST ab.

Falls alle Stellen am Bildschirm BS angezeigt werden sollen, die einem bestimmten Steuerzeichen zugeordnet sind, sind unter der Adresse im Zeichengenerator Z, die dem jeweiligen Codewort CW1 entspricht, die Datenwörter des Sonderzeichens gespeichert.

Wenn der Vergleicher VG die Gleichheit des eingegebenen Codewortes CW1 mit dem ausgelesenen Codewort CW feststellt, wird das entsprechende Sonderzeichen am Bildschirm BS angezeigt. Der Taktgeber TG ist in diesem Fall nicht erforderlich und das Signal S5 kann unmittelbar der Bildsteuereinheit BST zugeführt werden.

Mit Hilfe des Verfahrens und der Anordnung ist es auch möglich, außer den Steuerzeichen auch diejenigen Stellen am Bildschirm BS zu kennzeichnen, bei denen graphische Muster punktweise im selben Raster dargestellt werden wie die alphanumerischen Zeichen. Diese graphischen Muster sind üblicherweise in einem Schreib/Lesespeicher gespeichert und werden unter vorgegebenen Adressen dort aufgerufen (DRCS, dynamically redefinable character set). An den entsprechenden Stellen in Seitenspeicher sind dann die Adressen dieser Muster gespeichert. Falls diese Adressen mittels der Tastatur aufgerufen werden, werden die Stellen am Bildschirm BS angezeigt, dan denen die entsprechenden graphischen Muster dargestellt werden.

## Patentansprüche

1. Verfahren zum Darstellen von Steuerzeichen an einem Bildschirm (BS) einer Anzeigeeinrichtung (AE), die einen Seitenspeicher (SP) enthält, in dem Codewörter (CW) speicherbar sind, die am Bildschirm anzeigbaren alphanumerischen und/oder graphischen Zeichen und die Eigenschaften dieser Zeichen bestimmenden Steuerzeichen zugeordnet sind, die eine Tastatur (TA) enthält, mittels der die den anzeigbaren Zeichen und den Steuerzeichen zugeordneten Codewörter (CW) in den Seitenspeicher (SP) eingebbar sind und die eine mit einem Zeichengenerator (Z) versehene Bildsteuereinheit (BST) enthält, die die Darstellung der Zeichen am Bildschirm (BS) steuert und bei der zum Erstellen und/oder Bearbeiten des ein besonderer Betriebszustand einstellbar ist, in dem den Steuerzeichen zugeordnete Sonderzeichen am Bildschirm darstellbar sind, dadurch gekennzeichnet, daß nach dem Betätigen einer einem bestimmten Steuerzeichen zugeordneten Taste an der Tastatur (TA) an wenigstens einer Stelle am Bildschirm (BS), die diesem Steuerzeichen im Seitenspeicher (SP) zugeordnet ist, ein nur dieser Steuertask zugeordnetes Sonderzeichen dargestellt wird und daß die Darstellung der den übrigen Steuerzeichen zugeordneten Sonderzeichen am Bildschirm gesperrt wird.

2. Verfahren nach Anspruch 1, dadurch gekennzeichnet, daß nach jeweils einer weiteren Betätigung der Taste des Sonderzeichen an der jeweils nächsten diesem Steuerzeichen zugeordneten Stelle am Bildschirm (BS) dargestellt wird.

3. Verfahren nach Anspruch 1, dadurch gekennzeichnet, daß nach dem Betätigen der Taste das Sonderzeichen an allen diesem Steuerzeichen zugeordneten Stellen am Bildschirm (BS) dargestellt wird.

4. Verfahren nach Anspruch 1 oder 2, dadurch gekennzeichnet, daß als Sonderzeichen die Schreibmarke vorgesehen ist.

5. Verfahren nach einem der Ansprüche 1 bis 4, dadurch gekennzeichnet, daß gleichzeitig mit der Darstellung des Sonderzeichens am Bildschirm (BS) in einer zusätzlichen Anzeigezeile ein die Steuerzeichen kennzeichnender Text dargestellt wird.

6. Verfahren nach einem der Ansprüche 1 bis 5, dadurch gekennzeichnet, daß während der Darstellung der Sonderzeichen die Darstellung der alphanumerischen und/oder graphischen Zeichen gesperrt wird.

7. Schaltungsanordnung zur Durchführung des Verfahrens nach Anspruch 1, dadurch gekennzeichnet, daß von der Tastatur (TA) das dem jeweiligen Steuerzeichen zugeordnete Codewort (CW1) einer Schaltstufe zugeführt wird, die das Codewort (CW1) mit im Seitenspeicher (SP) gespeicherten Codewörtern vergleicht und die an die Bildsteuereinheit (BST) Signale (S2) abgibt, die die Anzeige des Sonderzeichens am Bildschirm (BS) auslösen, wenn ein Vergleicher (VG) die Gleichheit eines aus dem Seitenspeicher (SP) ausgelesenen Codewortes (CW) mit dem mittels der Tastatur eingegebenen Codewort (CW1) feststellt.

8. Schaltungsanordnung nach Anspruch 7, dadurch gekennzeichnet, daß die Schaltstufe (S) einen Taktgeber (TG) enthält, der Taktimpulse (S4) erzeugt, mit denen die Anzeige des Sonderzeichens fortgeschaltet wird und der durch ein vom Vergleicher abgegebenes Signal (S5) gesperrt wird, wenn das vom Seitenspeicher (SP) ausgelesene Codewort (CW) und das eingegebene Codewort (CW1) gleich sind.

9. Schaltungsanordnung nach Anspruch 7 oder Anspruch 8, dadurch gekennzeichnet, daß ein weiterer Zeichengenerator (Z1) vorgesehen ist, in dem Datenwörter gespeichert sind, die den Formen von die Steuerzeichen kennzeichnenden Zeichen zugeordnet sind und die ausgelesen werden, wenn ein aus dem Seitenspeicher (SP) ausgelesenes Codewort (CW) und das eingegebene Codewort (CW1) gleich sind.

**Revendications**

1. Procédé pour représenter des caractères de commande sur un écran (BS) d'une installation d'affichage (AE) qui comporte une mémoire de pages (SP) dans laquelle sont susceptibles d'être mémorisés des mots de code (CW) qui sont associés à des caractères alphanumériques et/ou des caractères graphiques susceptibles d'être affichés sur l'écran, et des caractères de commande qui déterminent les propriétés de ces caractères, qui comporte un clavier (TA) à l'aide duquel on peut introduire dans la mémoire de pages (SP) les mots de code (CW) associés aux caractères susceptibles d'être affichés et aux caractères de commande, qui comporte une unité de commande de l'image (BST) pourvue d'un générateur de caractères (Z), qui commande la représentation des caractères sur l'écran, et dans laquelle est susceptible d'être réglé, pour établir et/ou pour traiter le contenu de l'écran, un état de fonctionnement particulier dans lequel sont susceptibles d'être représentés sur l'écran des caractères particuliers associés aux caractères de commande, caractérisé par le fait qu'après actionnement d'une touche du clavier (TA), qui est associée à un caractère de commande déterminé, on représente un au moins un emplacement de l'écran, qui n'est associé, dans la mémoire de pages, qu'à cette touche, un caractère spécial qui n'est associé qu'à cette touche de commande, et que la représentation sur l'écran des caractères spéciaux associés aux autres caractères de commande est bloquée.

2. Procédé selon la revendication 1, caractérisé par le fait qu'après une seconde commande de la touche, le caractère spécial est représenté à l'emplacement suivant de l'écran (BS), associé à ce caractère de commande.

3. Procédé selon la revendication 1, caractérisé par le fait qu'après la commande de la touche, le caractère spécial est représenté sur l'écran dans toutes les positions qui sont associées à ce caractère de commande.

4. Procédé selon la revendication 1 ou 2, caractérisé par le fait qu'il est prévu un repère d'écriture comme caractère spécial.

5. Procédé selon l'une des revendications 1 à 4, caractérisé par le fait qu'en même temps que la représentation du caractère spécial, on représente sur l'écran (BS), dans une ligne d'affichage supplémentaire, un texte significatif des caractères de commande.

6. Procédé selon l'une des revendications 1 à 5, caractérisé par le fait que pendant la représentation des caractères spéciaux, on bloque la représentation des caractères alphanumériques et/ou graphiques.

7. Montage pour la mise en oeuvre du procédé selon la revendication 1, caractérisé par le fait qu'à partir du clavier (TA), le mot de code (CW1) qui est associé au caractère de commande correspondant, est appliqué à un étage de commutation (S) qui compare le mot de code (CW1) avec les mots de code qui sont mémorisés dans la mémoire de pages (SP) et qui émet à l'unité de commande de l'image (BST) des signaux qui déclenchent l'affichage du caractère spécial sur l'écran (BS) dans le cas où un comparateur (VG) constate l'identité d'un mot de code (CW) qui est lu dans la mémoire de pages (SP) avec le mot de code (CW1) introduit à l'aide du clavier.

8. Montage selon la revendication 7, caractérisé par le fait que l'étage de commutation (S) comporte un générateur de cadence (TG) qui produit des impulsions de cadence (S4) à l'aide desquelles l'affichage du caractère spécial est avancé pas-à-pas et qui est bloqué par un signal (S5) émis par le comparateur, lorsque le mot de code (CW) lu dans la mémoire de pages (SP) et le mot de code (CW1) qui a été introduit, sont égaux.

9. Montage selon la revendication 7 ou la revendication 8, caractérisé par le fait qu'il est prévu un second générateur de caractères (Z1) dans lequel sont mémorisés des mots de données qui sont associés aux formes des caractèes spécifiques des caractères de commande et qui sont lus si un mot de code (CW) qui est lu dans la mémoire de pages (SP) et le mot de code (CW1) qui a été introduit, sont égaux.

## Claims

1. A method of presenting control characters on a screen (BS) of a display device (AE) which includes a page store (SP) in which can be stored code words (CW) which are assigned to alpha-numerical and/or graphic characters which can be displayed on the screen and to control characters which determine the characteristics of these characters, which further includes a keyboard (TA) by means of which the code words (CW), which are assigned to the characters to be displayed and to the control characters, can be input into the page store (SP) and which includes an image control unit (BST) which is provided with a character generator and which controls the presentation of the characters on the screen (BS), and wherein, in order to set up and/or process the screen content, a special operating state can be set up in which special characters, assigned to the control characters, can be displayed on the screen, characterised in that following the actuation of the keyboard (TA) of a key assigned to a specified control character, at at least one location of the screen (BS) which is assigned to this control character in the page store (SP), a special character is presented which is assigned only to this control key, and that the presentation on the screen of the special characters assigned to the other control character is blocked.

2. A method as claimed in claim 1, characterised in that following a reactuation of the key, the special character is presented on the screen (BS) at the next location assigned to this control character.

3. A method as claimed in claim 1, characterised in that following the actuation of the key, the special character is presented on the screen (BS) at all the locations assigned to this control character.

4. A method as claimed in claim 1, characterised in that the write mark is provided by way of special character.

5. A method as claimed in one of the claims 1 to 4, characterised in that simultaneously to the presentations of the special character on the screen (BS) a text characterising the control characters is presented in an additional display line.

6. A method as claimed in one of the claims 1 to 5, characterised in that during the presentation of the special characters, the presentation of the alpha-numerical and/or graphic characters is blocked.

7. A circuit arrangement for the implementation of the method claimed in claim 1, characterised in that from the keyboard (TA) the code word (CW) which is assigned to the control character in question is fed to a switching stage (S) which compares the code word (CW1) with code words stored in the page store (SP), and which supplies the image control unit (BST) with signals (S2) which trigger the display of the special character on a screen (BS) when a comparator (VG) establishes that a code word (CW), read out from the page store (SP), is identical to the code word (CW1) which has been input by means of a keyboard.

8. A circuit arrangement as claimed in claim 7, characterised in that the switching stage (S) includes a clock pulse generator (TG) which produces clock pulses (S4) by means of which the display of the special character is advanced and which is blocked by a signal (S5), emitted from the comparator, when the code word (CW) which has been read out from the page store (SP) and the input code word (CW) are identical.

9. A circuit arrangement as claimed in claims 7 or 8, characterised in that a further character generator (Z1) is provided which stores data words which are assigned to the forms of characters characterising the control characters, and which are read out when a code word (CW) read out from the page store (SP) and the input code word (CW1) are identical.

**FIG 1**

a

A B C | G |

b | ⌣ | α rot | Bl ein | ⌣ | ⌣ | A | B | C | ⌣ | Gr gn | sep Gr |

c | ⌣ | Bl ein | sep Gr | α rot | ⌣ | A | B | C | ⌣ | Gr gn | ⌣ |

**FIG 2**

a

A B C

b | ⌣ | Bl ein | sep Gr. | α rot | Bl aus | A | B | C | con Gr | Gr gn | Bl ein |

c | ⌣ | ⌣ | ⌣ | α rot | ⌣ | A | B | C | ⌣ | Gr gn | Bl ein |

**FIG 3**

a

A B C

b

A B C

c

Bl

# FIG 4

# FIG 5